# FASCICULE DE BREVET EUROPEEN

(11) **EP 1 764 275 B1**
(45) Date de publication et mention de la délivrance du brevet: **01.04.2009**
(21) Numéro de dépôt: 06360042.3
(22) Date de dépôt: 18.09.2006
(51) Int. Cl.: B60T 3/00

(54) **Dispositif bloqueur de roue de véhicule**
Unterlegekeil für Fahrzeugrad
Wheel chock for vehicle wheel

(30) Priorité: 19.09.2005 FR 0509561
(43) Date de publication de la demande: 21.03.2007
(73) Titulaire: Procédés de Manutention, 67720 Weyersheim (FR)
(72) Inventeur: Roere, Michel, 67720 Weyersheim (FR)
(74) Mandataire: Munier, Laurent

(56) Documents cités:
- EP-A- 0 775 653
- US-A- 5 743 697
- US-A- 6 082 952
- US-A- 6 123 496
- US-B1- 6 250 432

## Description

La présente invention se rapporte à un dispositif bloqueur de roue de véhicule, typiquement de camion.

L'invention concerne plus particulièrement un dispositif bloqueur pour la mise en oeuvre d'une procédure de chargement et déchargement dudit véhicule.

Des dispositifs bloqueurs comprenant au moins un moyen d'immobilisation de la roue déplaçables d'une position initiale repos vers une position de travail à l'arrière du pneu choisie parmi une pluralité de positions possibles sont connus. Ces dispositifs comprennent au moins un mécanisme de fonctionnement; le système de chargement et déchargement présentant un quai ou sas et au moins un moyen de guidage latéral pour le stationnement dudit véhicule s'étendant perpendiculairement par rapport au quai. Les dispositifs bloqueurs connus sont placés dans ledit moyen de guidage (voir US 3 305 049, DE 4 427406).

D'autres dispositifs connus présentent des moyens de calage se déplaçant horizontalement pour bloquer l'arrière du camion au niveau du quai.

Les moyens de calage connus présentent souvent une cale pleine sensiblement triangulaire (voir US 3305049, DE 4427406). Ce type de cale ne bloque réellement que les petits véhicules, car les grands camions avec grandes roues peuvent passer par dessus ce type de cale.

De plus, US 3 305 049 décrit une cale montée sur un axe pivotant entraînant un escamotage vers le haut. Ce dernier mouvement risque de provoquer une collision avec le bas des petits véhicules.

Des calages par appui du pneu sur des cylindres métalliques sont connus (voir barres décrites par FR 2 832 112). Mais ces barres sont immobilisées au même niveau de hauteur et à l'horizontal. Ils ne sont prévus que pour une seule taille de camion.

Or, des camions et autres véhicules à pneus tels que remorques, camionnettes, fourgons de différentes tailles circulent et doivent charger et décharger leurs marchandises.

Un camion plus grand a des roues plus grandes qu'un camion plus petit qui présentera des roues de plus petit diamètre.

En particulier, le dispositif décrit par le document WO 95/24 353 se déplacera horizontalement en fin de course avec la roue du camion jusqu'à ce que celui-ci touche le quai.

Il en découle que les dispositifs de calage connus sont toujours à une hauteur constante et unique en position de travail.

L'invention vise dans une première étape pour la résolution de ces inconvénients et permettre de caler le long du quai ou sas des véhicules de différentes tailles possédant des roues de différents diamètres, pour cela le dispositif selon l'invention est équipé d'au moins un moyen de détection du pneu. On connaît par le document US-A-6 123 496 des moyens de détection (mécanique) de pneu de véhicules.

Ces moyens restent orientés constant en hauteur et ne peuvent s'adapter qu'à la longueur des véhicules ; mais non aux hauteurs de roues.

Ainsi, le problème posé par la variété des véhicules en circulation n'est pas encore résolu.

Pour atteindre ce but, le moyen de détection du pneu, tel qu'une cellule, est relié au mécanisme de fonctionnement comprenant au moins un moyen de déplacement, guidage et arrêt longitudinal et comprenant au moins un moyen de déplacement et arrêt en hauteur variable de la première extrémité dudit moyen d'immobilisation qui est au moins un cylindre métallique d'appui sur pneu dont la deuxième extrémité est fixée pivotante dans un plan sensiblement vertical sur le moyen de déplacement longitudinal.

Ainsi, le dispositif selon l'invention s'adapte à différentes tailles de camions et aussi aux remorques, camionnettes et autres véhicules à roues à pneus de transport de marchandises.

Suivant d'autres caractéristiques:
- le moyen de déplacement, guidage et arrêt longitudinal étant mécanique comprend au moins un chariot bloqueur guidé sur des tubes et/ou profilés en acier standards du marché, pour roulement et une crémaillère et entraîné par un moteur.
- les profilés de roulements et la crémaillère sont placés au niveau de la partie haute du chariot.
- Afin que le moyen d'immobilisation soit escamotable, le moyen de déplacement en hauteur de la première extrémité du cylindre métallique (doigt) de blocage est un vérin fixé par son fourreau au chariot et sa tige au cylindre de blocage, le travail du vérin entraînant le pivotement dudit cylindre métallique.
- dans le but que le moyen d'immobilisation soit adapté en position de fonctionnement à plusieurs hauteurs de travail à la fois, le cylindre de blocage en position fonctionnement est d'axe incliné par rapport à l'horizontale.
- en vue de ne pas heurter les véhicules, une portion latérale inférieure du capot forme la limite supérieure de l'ouverture du logement et butée fin de course supérieure du cylindre métallique.

D'autres avantages de l'invention apparaîtront à la lecture de la description des dessins donnée à titre non limitatif et dans laquelle :
- La fig. 1 est une vue en élévation d'un moyen de guidage comprenant un dispositif de calage selon l'invention ;
- La fig. 2 est une vue en coupe longitudinale du moyen de la fig. 1 ;
- La fig. 3 est une vue en coupe transversale du niveau du dispositif de calage ;
- La fig. 4 est un organigramme présentant les différentes étapes de fonctionnement du dispositif de calage selon l'invention.

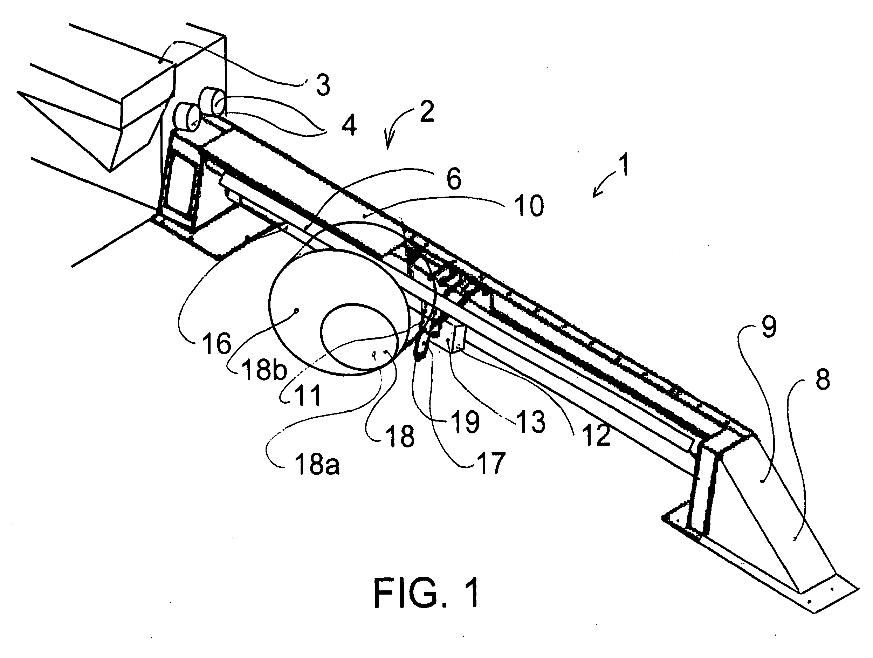

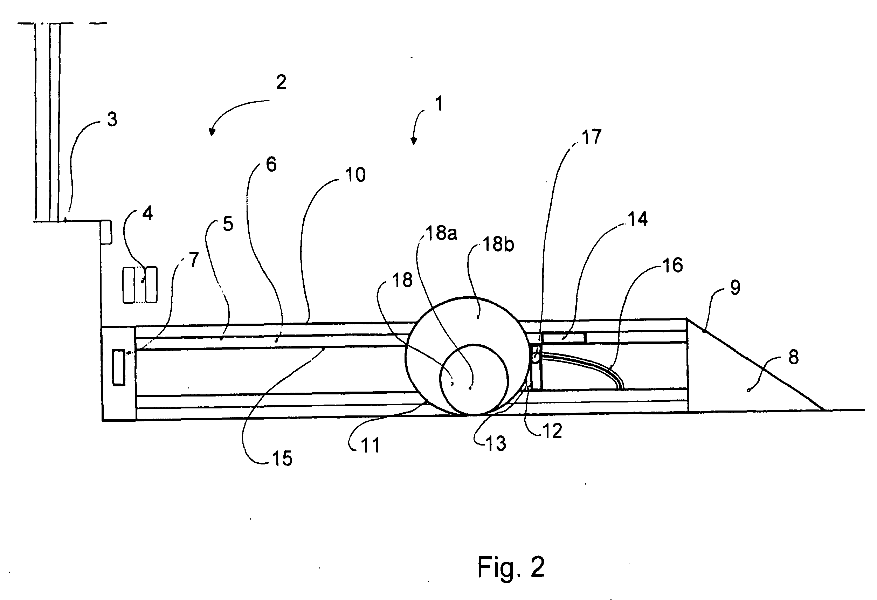

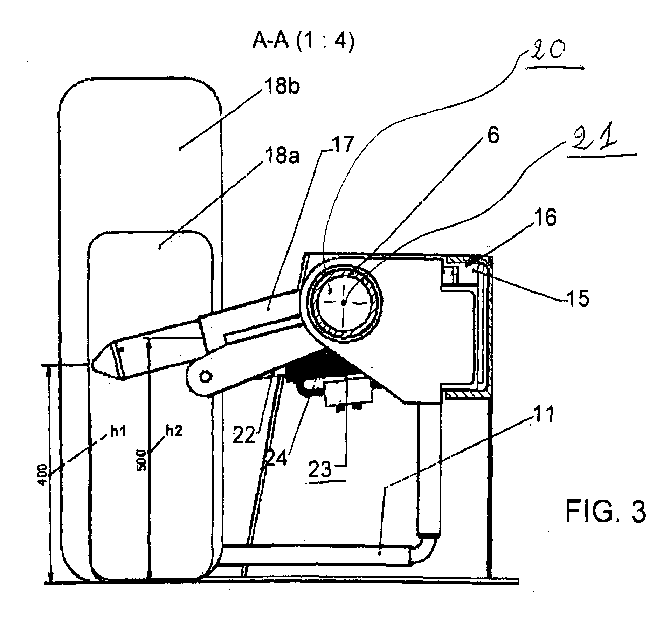

Le dispositif bloqueur de roue 1 représenté fig. 1, 2 et 3 est disposé dans une installation de mise en oeuvre d'une procédure de chargement et déchargement de véhicule 2. Ce système de chargement et déchargement 2 comprend un quai 3, des moyens de signalétique de type connu permettant d'amener le véhicule en marche arrière au contact du quai 3. Ces moyens de signalétique comprennent des feux de signalisation 4 et un moyen de guidage latéral 5 matérialisé sur le sol et s'étendant perpendiculairement par rapport au quai 3. Le moyen de guidage comprend un tube rectiligne 6 relié à chaque extrémité à un moyen support 7, 8. Le premier moyen support 7 est ajusté contre le quai 3. Le deuxième moyen support 8 présente un face supérieure inclinée 9 descendant jusqu'au sol et montant jusqu'à un capot 10. Le capot 10 cache le tube 6 depuis le moyen support 8 jusqu'au moyen support 7.

Le dispositif bloqueur de roue à pneu 1 est placé dans le moyen de guidage 5. Il est équipé d'un moyen de détection 11 tel qu'une cellule, relié à un mécanisme de fonctionnement 12. Le mécanisme de fonctionnement comprend des commandes 13 asservies à ce moyen de détection 11 et dirigeant le chariot bloqueur 14 guidé sur le tube 6 formant tube ou profilé de roulement et entraîné par son déplacement rectiligne sur une crémaillère 15 placée dans le profilé de roulement. Le dispositif bloqueur 1 est aussi entraîné et verrouillé par un moteur 16. Un cylindre métallique 17 vient immobiliser par pivotement le pneu 18 ce qui bloque le véhicule. La première extrémité 19 du cylindre 17 est libre. La deuxième extrémité 20 est fixée sur un axe 21 du chariot 14. L'axe 21 et le cylindre 19 pivotent dans le plan vertical.

Le cylindre 17 est entraîné vers le haut dans sa rotation sous l'effet de la poussée d'une tige 22 de vérin 23 dont le fourreau 24 est fixé pivotant à un support 25 lié au chariot 14.

En position repos, le cylindre 17 est descendu jusqu'à la position basse. En position travail ou immobilisation du pneu 18 le cylindre 17 est soulevé en position inclinée. Donc, il n'atteint jamais la position horizontale.

Ainsi, son extrémité 19 se situe à une petite hauteur h1 immobilisant les petits pneus 18a des petits véhicules et sa partie centrale se situe à une plus grande hauteur h2 immobilisant les grands pneus 18b de grands véhicules.

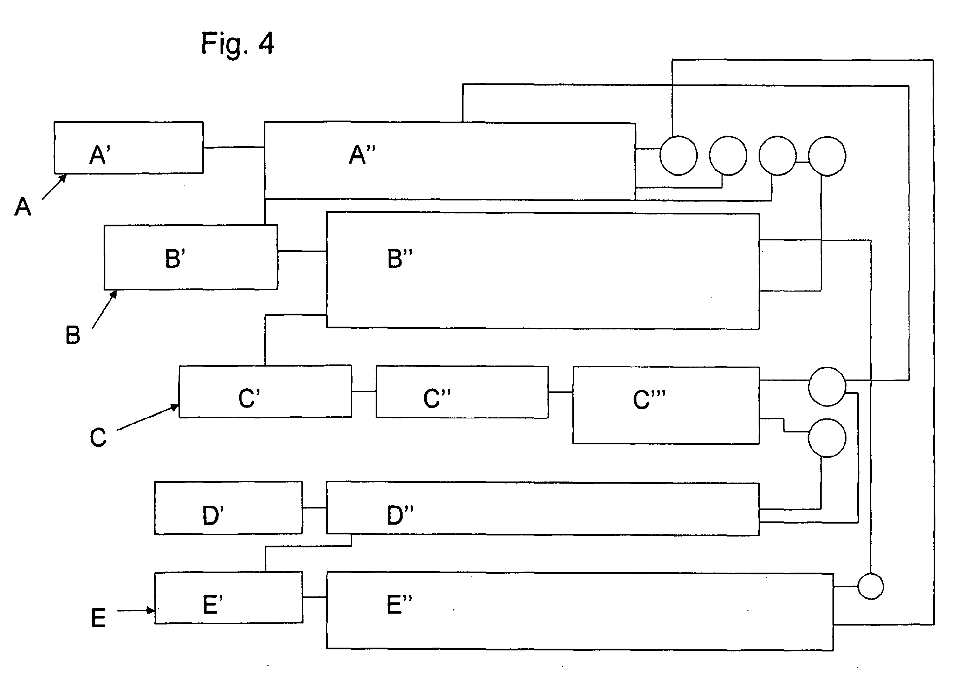

Les étapes de fonctionnement du dispositif selon l'invention sont représentées fig. 4.

Un grand véhicule camion se présente dans une première étape A; en deuxième étape B les moyens de signalétique, feux 4 et guidage latéral 5 et le cylindre métallique 17 étant en position verticale vers le bas (position repos) lui permettent d'arriver en marche arrière jusqu'au quai 3 de déchargement et/ou chargement; le camion s'arrête plateau au continuité du quai 3.

En étape C, le chariot 14 est déplacé jusqu'au niveau du pneu 18b puis le moyen 11 actionne le vérin 23 en étape D ; la sortie de la tige 22 soulève par pivotement l'extrémité 19 et le centre du cylindre métallique 17 jusqu'à la position travail; le camion est bloqué par immobilisation du pneu 18b le par appui à la hauteur h2 de la partie centrale du cylindre 17 sur ledit pneu 18b. Le camion est bloqué. Après les opérations de transbordement de la marchandise, le cylindre 17 est rabattu en position verticale (étape E) ; le camion est libéré en évitant tout mouvement horizontal ou montant afin de ne pas heurter les véhicules avec garde au sol basse, et les inconvénients des déplacements de grandes ampleurs de l'état de la techniques (cales volumineuses, déplacement horizontal).

Ensuite, le camion de grande taille s'en va, un autre véhicule se présente, retour à l'étape A. s'il s'agit d'un véhicule plus petit comme un fourgon les étapes sont identiques avec la particularité qu'en étape D c'est l'extrémité 19 qui appuie sur le petit pneu 18a à la petite hauteur h1 du cylindre métallique 17; d'où blocage du fourgon.

Ainsi, le dispositif selon l'invention est ,prévu pour fonctionner avec des véhicules de grandes tailles avec grands pneus 18b tels que camions ou remorques, tout autant qu'avec des véhicules de petites tailles comme les fourgons, camionnettes en conservant les mêmes étapes A, B, C, D, E.

| Etapes | Véhicule | Dispositif bloqueur |
|---|---|---|
| FONCTIONNEMENT | | |
| A | A' Le camion entame son accostage | A" |
| | | 1. le feu vert extérieur et le feu rouge intérieur sont allumés |
| | | 2. à un mètre du quai le feu orange s'allume |
| | | 3. à quarante centimètres les feux rouges s'allument pendant vingt secondes |
| B | B' Le chauffeur va sécuriser l'immobilisation de son camion | B" |
| | | 1. il appuie sur le bouton « blocage » situé à la pointe du bloqueur |
| | | 2. le chariot avance |
| | | 3. la cellule détecte le pneu (celui-ci est relevé, il passe au suivant) |
| | | 4. le doigt de blocage se lève en contournant le diamètre de la roue |
| | | 5. en position haute, le chariot est bloqué mécaniquement |
| | | 6. le feu rouge extérieur s'allume |
| | | 7. l'autorisation de mise en place du niveleur est donnée |
| C | | C' |
| | | - Ouverture de la porte |
| | | C" |
| | | - Ouverture éventuelle des barrières |
| | | C"' |
| | | - Mise en place du niveleur : |
| | | - extinction du feu rouge intérieur |
| | | - allumage du feu vert intérieur |

| TRANSBORDEMENT | | |
|---|---|---|
| D | D' Le cariste va commencer le cycle de déblocage | D" Rangement du niveleur : allumage du feu rouge intérieur et extinction du feu vert |
| E | E' Fermeture éventuelle des barrières | E" Déblocage du camion : |
| | | - appui sur « déblocage » jusqu'à l'allumage du voyant « cale rangée » |
| | | - le feu vert extérieur s'allume |
| | | - le chauffeur peut partir. |

Bien que l'invention ait été décrite en liaison avec des structures particulières, elle n'y est nullement limitée et on peut y apporter de nombreuses variantes.

Les combinaisons des différentes réalisations représentées sur les Fig. ou décrites ci-dessus ne sortent pas du cadre de l'invention.

### Signes de référence

- 1.: Dispositif bloqueur de roue
- 2.: Système de chargement et déchargement de véhicule
- 3.: Quai
- 4.: Feux
- 5.: Moyen de guidage latéral
- 6.: Tube rectiligne 7. Moyen support 8. Moyen support
- 9.: Face supérieure inclinée 10. Capot
- 11.: Moyen de détection
- 12.: Mécanisme de fonctionnement
- 13.: Commandes
- 14.: Chariot bloqueur
- 15.: Crémaillère
- 16.: Moteur
- 17.: Cylindre métallique
- 18.: Pneu
- 19.: Première extrémité
- 20.: Deuxième extrémité
- 21.: Axe
- 22.: Tige
- 23.: Vérin
- 24.: Fourreau
- 25.: Support
- h1: Petite hauteur position travail
- h2: Grande hauteur position travail 18a Petit pneu
- 18b: Grand pneu
- A: Etape de présentation véhicule
- B: Etape de stationnement
- C: Etape de positionnement du chariot
- D: Etape de verrouillage
- E: Etape de libération du véhicule

Les signes de références insérés après les caractéristiques techniques mentionnées dans les revendications ont pour seul but de faciliter la compréhension de ces dernières et n'en limitent aucunement la portée.

## Revendications

1. Dispositif bloqueur de roue de véhicule (1), typiquement de camion destiné à au moins un pneu, pour système de chargement et déchargement dudit véhicule (2), le dispositif bloqueur (1) comprenant au moins un moyen d'immobilisation déplaçable d'une position initiale vers une position de travail à l'arrière du pneu choisie parmi une pluralité de positions possibles, au moins un mécanisme de fonctionnement au moins un moyen de détection (11) du pneu ; l'installation de chargement et déchargement (2) présentant un quai (3) ou sas et au moins un moyen de guidage latéral (5) pour le stationnement dudit véhicule s'étendant perpendiculairement par rapport au quai (3) ; le dispositif bloqueur (1) étant placé dans ledit moyen de guidage (5), **caractérisé en ce** ledit moyen de détection (11) du pneu reliée au mécanisme de fonctionnement comprenant au moins un moyen de déplacement, guidage et arrêt longitudinal et comprenant au moins un moyen de déplacement et arrêt en hauteur variable, de la première extrémité dudit moyen d'immobilisation qui présente au moins un cylindre métallique (17) d'appui sur pneu dont la deuxième extrémité est fixée pivotante dans un plan sensiblement vertical sur le moyen de déplacement longitudinal.

2. Dispositif selon la revendication 1, dans lequel le moyen de déplacement, guidage et arrêt longitudinal étant mécanique comprend au moins un chariot bloqueur guidé sur des tubes et/ou profilés en acier standards de roulement et une crémaillère et entraîné par un moteur.

3. Dispositif selon la revendication précédente, dans lequel les profilés de roulements et la crémaillère sont placés au niveau de la partie haute du chariot.

4. Dispositif selon l'une quelconque des revendications précédentes dans lequel le moyen de déplacement en hauteur de la première extrémité du cylindre métallique (17) de blocage est un vérin fixé par son fourreau au chariot et sa tige au cylindre de blocage (17), le travail du vérin (23) entraînant le pivotement dudit cylindre métallique (17).

5. Dispositif selon l'une quelconque des revendications précédentes dans lequel le cylindre de blocage (17) en position fonctionnement est d'axe incliné par rapport à l'horizontale.

6. Dispositif selon l'une quelconque des revendications précédentes dans lequel une portion latérale inférieure du capot forme la limite supérieure de l'ouverture du logement et butée vers une course supérieure du cylindre métallique.

7. Dispositif selon l'une quelconque des revendications précédentes dans lequel le moyen de détection est une cellule reliée au mécanisme de fonctionnement.

## Claims

1. Device for blocking a vehicle wheel (1), typically for a lorry intended for at least one tyre, for the loading and unloading system of said vehicle (2), the blocking device (1) comprising at least one means of immobilisation that can be displaced from an initial position to a working position behind the tyre chosen from among a plurality of possible positions, at least one operating mechanism at least one means of detection (11) of the tyre; the installation of loading and unloading (2) having a dock (3) or chamber and at least one means of lateral guiding (5) for the parking of said vehicle extending perpendicularly in relation to the dock (3); the blocking device (1) being placed in said means of guiding (5), **characterised in that** said means of detection (11) of the tyre connected to the operating mechanism comprising at least one means of displacement, guiding an longitudinal stop and comprising at least one means of displacement and stoppage with variable height, of the first end of said means of immobilisation which has at least one metal support cylinder (17) on the tyre of which the second end pivots in a substantially vertical plane on the means of longitudinal displacement.

2. Device as set forth in claim 1, wherein the means of displacement, guiding and longitudinal stoppage being mechanical comprising at least one blocking carriage guided on standard steel bearing tubes and/or sections and a rack and driven by a motor.

3. Device as set forth in the preceding claim, wherein the bearing sections and the rack are placed on the upper portion of the carriage.

4. Device as set forth in any of the preceding claims wherein the means of displacement in height of the first end of the metal blocking cylinder (17) is a plunger cylinder fixed by its sleeve to the carriage and its rod to the blocking cylinder (17), the work of the plunger cylinder (23) driving the pivoting of said metal cylinder (17).

5. Device as set forth in any of the preceding claims wherein the blocking cylinder (17) in operating position is of an inclined axis in relation to the horizontal.

6. Device as set forth in any of the preceding claims wherein a lower lateral portion of the bonnet forms the upper limit of the opening of the housing and as a thrust bearing to an upper travel of the metal cylinder.

7. Device as set forth in any of the preceding claims wherein the means of detection is a cell connected to the operating mechanism.

## Patentansprüche

1. Blockervorrichtung eines Fahrzeugrades (1), typisch für mindestens einen Reifen an einem bestimmten Lastwagen, für ein Ladung- Entladungssystem dieses Fahrzeuges (2); diese Blockervorrichtung (1) inkludiert wenigstens ein Mittel des verstellbaren Stillstands von einer anfänglichen Position gegen eine Arbeitslage hinten an dem gewählten Reifen, aus einer Vielzahl von möglichen Positionen, mindestens ein Mittel des verstellbaren Stillstands, zu mindestens ein Funktionsmechanismus mittels wenigstens einem Feststellungsmittel (11) des Reifen; das Ladung und Entladungssystem (2) bietet einem Anlegeplatz (3) oder einer Luftschleuse mindestens ein Mittel für seitliche Steuerung (5) dar zum Parken des sich im Vergleich zu dem Anlegeplatz (3) rechtwinkligen ausbreitenden Fahrzeug; diese Blocker- Vorrichtung (1) ist in diesem Steuerungsmittel (5) angebracht, **dadurch gekennzeichnet daß** dieses genannte Feststellungsmittel (11) des Reifen, verbunden mit dem Funktionsmechanismus das wenigstens ein Verschiebungsmittel einbegrifft, Steuerung und longitudinaler Halt und in veränderlicher Höhe mindestens ein Mittel für Verschiebung und Halt verstehend, am ersten Ende des Ruhigstellungsmittel ist zu mindest ein metallischen Zylinder (17) zur Stütze an einen Reifen angebracht der sich in einem senkrechten Plan auf dem Mittel der longitudinalen Verschiebung dreht.

2. Vorrichtung nach Anspruch 1 in dem das Führungsmittel, Steuerung und longitudinal Halter mechanisch ist angebracht auf mindestens einem auf Standardrohre u/o Profilstahl geführten Blockerwagen auf einer Zahnschiene von einem Motor angetrieben ist.

3. Vorrichtung nach vorherigem Anspruch, wo die Führungsmittel und die Zahnschiene am obigen Teil des Führungswagens angebracht sind.

4. Vorrichtung nach dem einem vorgehenden Anspruch wo das Mittel zum Anheben in die Höhe des ersten Teiles vom metallischen Zylinder (17) zur Blockierung eine von seiner Scheide am Wagen befestigte Winde, und seine Zylinderstange (17) die Wirkung der Winde (23) ergibt sich das Einschwenken des metallischen Zylinder (17).

5. Vorrichtung nach dem einem vorgehenden Anspruch wo der Sperrungszylinder (17) in seiner Funktionierungsposition ist die Achse geneigt im Vergleich der Waagenrechte Lage.

6. Vorrichtung nach dem einem vorgehenden Anspruch in welcher eine niedrig seitliche Portion der Motorhaube die obige Öffnung des Raumes und sogleich Anschlag ist für den nach oben gehenden Weg des metallischen Zylinder.

7. Vorrichtung nach dem einem vorgehenden Anspruch indem das Feststellungsmittel eine Feststellungszelle ist die an das Funktionsmechanismus angeschlossen ist.
